# FASCICULE DE BREVET EUROPEEN

(11) **EP 2 598 697 B1**
(45) Date de publication et mention de la délivrance du brevet: **14.05.2014**
(21) Numéro de dépôt: 11755366.9
(22) Date de dépôt: 26.07.2011
(51) Int. Cl.: E01C 23/082

(54) **DISPOSITIF DESTINE A L'INCORPORATION ET LA REPARTITION DE SABLE ET DE GRANULATS DANS UN GAZON SYNTHETIQUE**
VORRICHTUNG ZUR EINBRINGUNG UND VERTEILUNG VON SAND UND GRANULAT IN EINEM KUNSTRASEN
DEVICE FOR THE INCORPORATION AND REPARTITION OF SAND AND AGGREGATE IN SYNTHETIC GRASS COVERS

(30) Priorité: 27.07.2010 FR 1003138
(43) Date de publication de la demande: 05.06.2013
(73) Titulaire: Cuadrado, Jean-Claude, 66180 Villeneuve de la Raho (FR)
(72) Inventeur: Cuadrado, Jean-Claude, 66180 Villeneuve de la Raho (FR)
(74) Mandataire: Gosse, Michel
(86) Numéro de dépôt international: PCT/FR2011/000445
(87) Numéro de publication internationale: WO 2012/022855

(56) Documents cités:
- EP-A1- 1 356 720
- GB-A- 2 248 757
- NO-B1- 326 096
- US-A- 5 833 013
- US-A1- 2003 226 671

## Description

### DOMAINE DE L'INVENTION

L'invention concerne un dispositif conçu pour l'incorporation et la répartition, par brassage, du sable destiné à pondérer un gazon synthétique ainsi que des granulats caoutchouteux destinés à améliorer sa souplesse.

### ARRIERE PLAN TECHNOLOGIQUE

Un gazon synthétique est constitué de brins souples solidarisés à un tapis posé à même le remblai.

Toute la difficulté réside :
a) lors de la pose du gazon :
   - à incorporer le sable et les granulats au plus près du tapis puisque les brins de gazon sont couchés par l'épandage du sable et du granulat ;
   - à les répartir de manière la plus homogène qui soit d'une part dans leur mélange et d'autre part sur la surface du tapis ;
   - à traiter les bords du tapis qui sont difficiles d'accès par les modules d'incorporation et de répartition basiques ;
   et ce par couches et passages successifs ;
b) lors de l'entretien du gazon :
   - à brasser le mélange de sable et de granulats au plus près du tapis tout en conservant ledit mélange homogène aussi bien dans sa composition que dans sa répartition spatiale ;
   - à traiter les bords du tapis ;
et ce, dans les deux cas, sans agresser ni arracher les brins et sans déplacer le tapis.

Aucun dispositif connu, à base de brosses ou de griffes, ne répond à ces divers critères.

En effet, on connaît :
- le document FR2813491 qui décrit une machine pour l'entretien d'un gazon synthétique comprenant au moins un dispositif pour peigner les fibres, constitué de peignes ou dents, entraîné en rotation par un ensemble « moteur, poulies et courroies » ;
- le document EP1356720 qui décrit un appareil pour l'entretien d'un gazon comprenant une partie centrale et deux extensions latérales déployables de manière à travailler indifféremment sur une surface réduite ou sur une surface étendue, lesdites parties étant porteuses de jeux de brosses.
- Le document US 2003/0226671 qui décrit une machine pour l'entretien d'un gazon comprenant un premier moyen pourvu de brosses permettant de soulever les brins du gazon avant l'action d'un deuxième moyen pourvu de dents permettant une répartition homogène des granulats.

Dans le premier document, les dents sont entraînées en rotation, à la manière d'un scarificateur, avec pour principales conséquences : la détérioration et l'arrachage des brins, le déplacement et l'abrasion du tapis, l'usure et l'encrassement des courroies, l'entretien des poulies et du moteur.

Dans le deuxième document, les bords du terrain ne sont pas traités puisque les extensions latérales, qui sont de simples modules d'élargissement, ne présentent pas de caractéristiques prévues à cet effet

### RESUME DE L'INVENTION

L'invention vise à réaliser un dispositif destiné à l'incorporation et la répartition, par brassage, du sable et des granulats qui élimine les inconvénients susmentionnés. Pour ce faire, le dispositif selon l'invention, a été conçu pour :
- lors du premier épandage, la couche du mélange à répartir étant faible, exercer une pression faible sur le gazon pour ne pas déplacer le tapis ;
- au fur et à mesure que la couche s'épaissit, exercer une pression de plus en plus importante ;
- traiter les bords des terrains qui ne sont pas accessibles par les dispositifs qui ne comportent pas de moyens latéraux conçus exclusivement à cet effet ;
- accroître le nombre de rangées de griffes opérantes au fur et à mesure de l'avancement de l'épandage qui s'effectue par couches successives ;
- diminuer le nombre de passages par sa rapidité de brassage résultant de la combinaison des griffes et des brosses sur un même châssis ainsi que de leur coopération ;
- pouvoir être utilisé avec ou sans ses extensions latérales qui, outre l'aspect rabattable, sont également désolidarisables (démontables) ;
- pouvoir être utilisé indifféremment pour la pose et pour l'entretien du gazon, avec ou sans ses extensions latérales.

Le dispositif selon l'invention se caractérise essentiellement en ce qu'il comporte, supportés par un même châssis et agissant successivement et en coopération :
a) un premier moyen destiné à améliorer, à chaque passage, en soulevant les brins, la pénétration du sable et des granulats entre les brins du gazon au plus près du tapis, ledit moyen étant constitué d'au moins une rangée de griffes solidaires d'un support transversal lui même solidaire d'un moyen configuré pour prérégler angulairement ledit support selon plusieurs positions de réglage de manière à faire croître la pression des griffes sur le gazon au fur et à mesure de l'avancement de l'épandage qui s'effectue par passages successifs
b) un deuxième moyen destiné à améliorer, à chaque passage, la répartition, sur ledit gazon, du sable et des granulats restant en surface après le passage du premier moyen, ledit deuxième moyen étant constitué d'au moins une rangée de brosses comprenant :
   - deux brosses centrales jointives, disposées en forme de « V », adaptées pour déplacer obliquement, dans la direction des extrémités libres desdites brosses, une partie du sable et des granulats ;
   - au moins deux brosses latérales, disposées, chacune, de chaque côté des brosses centrales, parallèlement à celle qui lui est en regard, adaptées pour déplacer obliquement, dans la direction des extrémités extérieures desdites brosses, une partie du sable et des granulats.

L'action des brosses s'effectue immédiatement après le passage des griffes avant que les brins ne soient retombés. Ce qui ne serait pas le cas si cette opération était exécutée par une autre machine, porteuse uniquement de brosses, lors d'un deuxième passage. De plus, celle-ci ne pourrait pas traiter de la même manière les brins couchés par les roues de la machine précédente.

Le dispositif selon l'invention se caractérise également en ce que le châssis supporte, en addition, des extensions latérales, conçues pour améliorer le travail sur les bords de terrains recouverts de gazon synthétique, pourvues de moyens configurés pour permettre auxdites extensions d'être rabattues sur ledit châssis ou d'être désolidarisées de celui-ci, comprenant, chacune :
a) au moins une rangée de griffes disposées en oblique afin que leurs extrémités s'étendent au delà du côté extérieur de chaque extension latérale, lesdites griffes étant solidaires d'un support transversal lui même solidaire d'un moyen configuré pour prérégler angulairement ledit support selon plusieurs positions de réglage de manière à faire croître la pression des griffes sur le gazon au fur et à mesure de l'avancement de l'épandage qui s'effectue par passages successifs ;
b) au moins une brosse disposée en oblique afin que son effet tende à ramener le sable et les granulats vers l'intérieur du terrain.

A titre d'exemple, le module de base possède une largeur de 2 mètres et les extensions latérales possèdent une largeur de 0,35 mètre. Les griffes et la brosse de chaque extension latérale, grâce à leur disposition en oblique, dépassent de 5 à 10 cm leur propre châssis ce qui permet un travail jusqu'aux bord du gazon, ce qui n'est pas possible avec le module central de base.

Selon une particularité de réalisation de l'invention, les griffes sont réalisées en un matériau élastique conçu pour permettre leur dégagement lorsqu'elles rencontrent une résistance susceptible de les détériorer.

Dans la réalisation préférée de l'invention :
a) le châssis comporte trois rangées de griffes solidaires de trois supports transversaux eux mêmes solidaires d'un même moyen conçu pour :
   - d'une part, prérégler angulairement, simultanément, lesdits supports selon plusieurs positions de réglage de manière à faire croître la pression des griffes sur le gazon au fur et à mesure de l'avancement de l'épandage ;
   - d'autre part, solidariser, séparément, chacun desdits supports audit moyen de manière à faire croître le nombre de rangées de griffes opérantes au fur et à mesure de l'avancement de l'épandage.
b) chaque extension latérale comporte deux rangées de griffes solidaires de deux supports transversaux eux mêmes solidaires d'un même moyen conçu pour :
   - d'une part, prérégler angulairement, simultanément, lesdits support selon plusieurs positions de réglage de manière à faire croître la pression des griffes sur le gazon au fur et à mesure de l'avancement de l'épandage ;
   - d'autre part, solidariser, séparément, chacun desdits supports audit moyen de manière à faire croître le nombre de rangées de griffes opérantes au fur et à mesure de l'avancement de l'épandage.

En outre, le dispositif selon l'invention, par un usage d'entretien régulier, évite la formation de mousse et la prolifération de graminées.

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins :

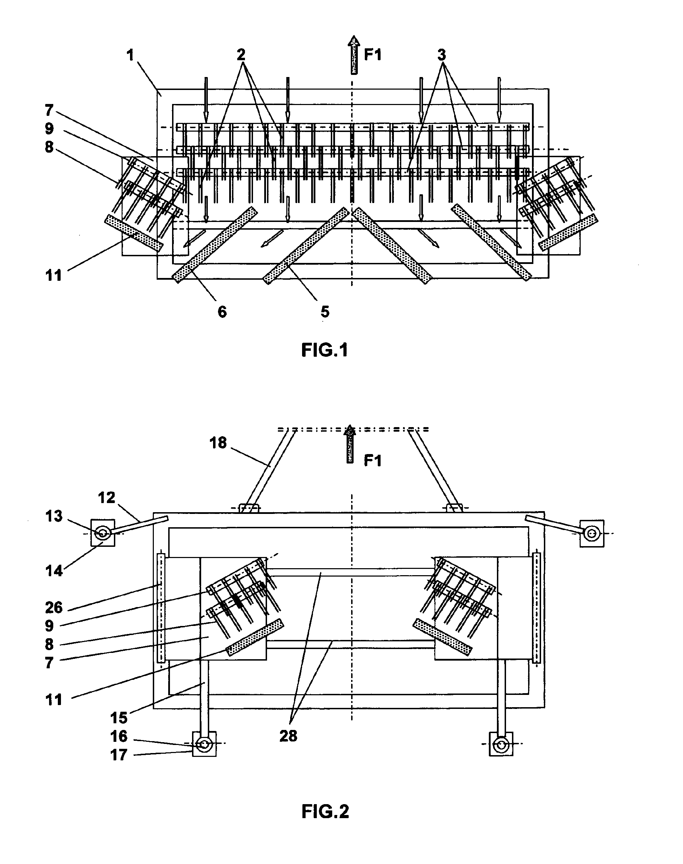

- la figure 1 est une vue de dessous du dispositif selon l'invention ne représentant que le châssis comprenant 3 rangées de griffes et 1 rangée de 4 brosses ainsi que les extensions, déployées, comprenant, chacune, 2 rangées de griffes et 1 brosse ;
- la figure 2 est une vue de dessus dudit dispositif ne représentant que le châssis avec ses moyens de roulement, le départ de la flèche de tractage et les extensions rabattues avec, chacune, les griffes et la brosse ;

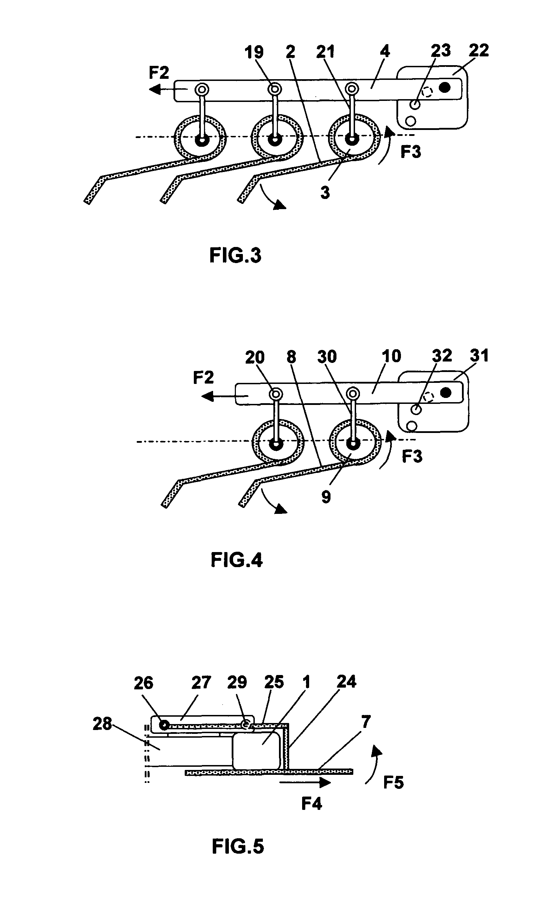

- la figure 3 est une vue de profil ne représentant que 3 rangées de griffes du châssis en liaison avec le moyen adapté pour prérégler leur pression sur le gazon ;
- la figure 4 est une vue de profil ne représentant que 2 rangées de griffes des extensions en liaison avec le moyen adapté pour prérégler leur pression sur le gazon ;
- la figure 5 est une vue de profil d'une extension latérale mettant en évidence sa conception et son montage par rapport au châssis du dispositif.

### DESCRIPTION DETAILLEE DE L'INVENTION

Le dispositif représenté aux figures est conçu pour améliorer l'incorporation et la répartition, par brassage, dans un gazon synthétique, de sable destiné à le pondérer ainsi que de granulats caoutchouteux destinés à améliorer sa souplesse, ledit gazon étant constitué de brins souples solidarisés à un tapis.

Le dispositif selon l'invention comporte, supportés par un même châssis (1) et agissant successivement et en coopération :
a) un premier moyen destiné à améliorer, à chaque passage, en soulevant les brins, la pénétration du sable et des granulats entre les brins du gazon au plus près du tapis, ledit moyen étant constitué d'au moins une rangée de griffes (2) solidaires d'un support transversal (3) lui même solidaire d'un moyen (4,21,22) configuré pour prérégler angulairement ledit support (3) selon plusieurs positions de réglage (23) de manière à faire croître la pression des griffes (2) sur le gazon au fur et à mesure de l'avancement de l'épandage qui s'effectue par passages successifs
b) un deuxième moyen destiné à améliorer, à chaque passage, la répartition, sur ledit gazon, du sable et des granulats restant en surface après le passage du premier moyen, ledit deuxième moyen étant constitué d'au moins une rangée de brosses (5,6) comprenant :
   - deux brosses centrales jointives (5), disposées en forme de « V », adaptées pour déplacer obliquement, dans la direction des extrémités libres desdites brosses, une partie du sable et des granulats ;
   - au moins deux brosses latérales (6), disposées, chacune, de chaque côté des brosses centrales (5), parallèlement à celle qui lui est en regard, adaptées pour déplacer obliquement, dans la direction des extrémités extérieures desdites brosses, une partie du sable et des granulats.

Le châssis (1) supporte, en addition, des extensions latérales (7), conçues pour améliorer le travail sur les bords de terrains recouverts de gazon synthétique, pourvues de moyens (25,26,27) configurés pour permettre auxdites extensions d'être rabattues sur ledit châssis (1) ou d'être désolidarisées (enlevées) de celui-ci, et comprenant, chacune :
a) au moins une rangée de griffes (8) disposées en oblique afin que leurs extrémités s'étendent au delà du côté extérieur de chaque extension latérale (7), lesdites griffes étant solidaires d'un support transversal (9) lui même solidaire d'un moyen (10,30,31) configuré pour prérégler angulairement ledit support (9) selon plusieurs positions de réglage (32) de manière à faire croître la pression des griffes (8) sur le gazon au fur et à mesure de l'avancement de l'épandage qui s'effectue par passages successifs ;
b) au moins une brosse (11) disposée en oblique afin que son effet tende à ramener le sable et les granulats vers l'intérieur du terrain.

Les griffes (2) et (8) sont réalisées préférentiellement en un matériau élastique conçu pour permettre leur dégagement lorsqu'elles rencontrent une résistance susceptible de les détériorer.

Le dispositif selon l'invention peut comporter préférentiellement trois rangées de griffes (2) solidaires de trois supports transversaux (3) eux mêmes solidaires d'un même moyen (4) conçu pour :
- d'une part, prérégler angulairement, simultanément, lesdits support (3) selon plusieurs positions de réglage de manière à faire croître la pression des griffes (2) sur le gazon au fur et à mesure de l'avancement de l'épandage ;
- d'autre part, solidariser, séparément, chacun desdits supports (3) audit moyen (4) de manière à faire croître le nombre de rangées de griffes (2) opérantes au fur et à mesure de l'avancement de l'épandage.

Le moyen de préréglage peut être constitué d'un bras d'actionnement (4) relié à une platine (22) pourvue de plusieurs trous (23) adaptés pour définir plusieurs positions de réglages angulaires des supports (3) qui sont reliés audit bras (4) au moyen de biellettes (22).

Chaque support (3) peut être désolidarisé individuellement du moyen de préréglage (4) grâce à un moyen de désolidarisation (19), notamment de type vis et écrou ou attache rapide, destiné à rendre libre l'extrémité correspondante de la biellette (21).

Chaque extension latérale (7) peut comporter préférentiellement deux rangées de griffes (8) solidaires de deux supports transversaux (9) eux mêmes solidaires d'un même moyen (10) conçu pour :
- d'une part, prérégler angulairement, simultanément, lesdits support (9) selon plusieurs positions de réglage (32) de manière à faire croître la pression des griffes (8) sur le gazon au fur et à mesure de l'avancement de l'épandage ;
- d'autre part, solidariser, séparément, chacun desdits supports (9) audit moyen (10) de manière à faire croître le nombre de rangées de griffes (8) opérantes au fur et à mesure de l'avancement de l'épandage.

Chaque support (9) peut être désolidarisé individuellement du moyen de préréglage (10) grâce à un moyen de désolidarisation (20), notamment de type vis et écrou ou attache rapide, destiné à rendre libre l'extrémité correspondante de la biellette (30).

Chaque extension latérale, porteuse des griffes (8) et de la brosse (11), est constituée d'une platine horizontale (7) passant sous le châssis (1), d'une paroi de déport (24) verticale ou inclinée, d'une paroi supérieure horizontale (25) dont l'extrémité est reliée à une articulation (26) solidaire d'un support (27), lui même solidaire de longerons (28) du châssis (1), qui permet, par coulissement, le déplacement horizontal (F4) de celle-ci entre une position interne de travail, articulation en position (26), où la platine (7) passe sous le châssis (1) et une position externe de repos, articulation en position (29), où celle-ci est dégagée afin d'être rabattue (F5) sur ledit châssis.

Le châssis (1) peut comporter :
- latéralement, à l'avant, à l'extérieur de la zone de travail, des bras de déport (12) soutenant des axes (13) porteurs de roues (14) ;
- à l'arrière, des bras de soutien (15) soutenant des axes (16) porteurs de roues (17).

Les axes (13) et (16) peuvent comporter des moyens permettant de prérégler leur hauteur, donc celle des roues (14,17), par rapport leurs supports respectifs (12) et (15), donc du châssis (1).

Le châssis (1) peut être relié à un engin roulant motorisé :
- soit au moyen d'une flèche de tractage (18) ;
- soit au moyen d'un dispositif 3 points.

La flèche F1 indique le sens d'avance du châssis.

La flèche F2 indique le mouvement linéaire du moyen de préréglage (4,10) qui se traduit par un mouvement rotatif, indiqué par la flèche F3, des supports de griffes (3,9).

Le bras d'actionnement (10) est relié à une platine (31) pourvue de plusieurs trous (32) adaptés pour définir plusieurs positions de réglage angulaire des supports (9) donc de pression des griffes (8).

Chaque extension latérale, porteuse des griffes (8) et de la brosse (11), est constituée d'une platine horizontale (7) passant sous le châssis (1), d'une paroi de déport (24) verticale ou inclinée, d'une paroi supérieure horizontale (25) dont l'extrémité est reliée à une articulation (26) solidaire d'un support (27), lui même solidaire de longerons (28) du châssis (1), qui permet, par coulissement, le déplacement horizontal (flèche F4) de celle-ci entre une position interne de travail (articulation en position 26) où la platine (7) passe sous le châssis (1) et une position externe de repos (articulation en position 29) où celle-ci est dégagée afin d'être rabattue (flèche F5) sur ledit châssis.

Le châssis (1) peut comporter :
- latéralement, à l'avant, à l'extérieur de la zone de travail, des bras de déport (12) soutenant des axes (13) porteurs de roues (14) ;
- à l'arrière, des bras de soutien (15) soutenant des axes (16) porteurs de roues (17).

Les axes (13) et (16) peuvent comporter des moyens, notamment des cales ou des dispositifs télescopiques, permettant de prérégler leur hauteur, donc celle des roues (14,17), par rapport leurs supports respectifs (12) et (15), donc du châssis (1).

Le châssis (1) peut être relié :
- soit à un engin roulant motorisé au moyen d'une flèche de tractage (18) ;
- soit à un engin roulant motorisé au moyen d'un dispositif 3 points.

Bien entendu, l'homme de métier sera apte à réaliser l'invention telle que décrite et représentée en appliquant et en adaptant des moyens connus sans qu'il soit nécessaire de les décrire ou de les représenter.

Il pourra également prévoir d'autres variantes sans pour cela sortir du cadre de celle-ci qui est déterminé par la teneur des revendications.

## Revendications

1. Dispositif conçu pour améliorer l'incorporation et la répartition, par brassage, dans un gazon synthétique, de sable destiné à le pondérer ainsi que de granulats caoutchouteux destinés à améliorer sa souplesse, ledit gazon synthétique étant constitué de brins souples solidarisés à un tapis ;
**caractérisé en ce qu'**il comporte, supportés par un même châssis (1) et agissant successivement et en coopération :
a) un premier moyen destiné à améliorer, à chaque passage, en soulevant les brins, la pénétration du sable et des granulats entre les brins du gazon au plus près du tapis, ledit moyen comprenant au moins une rangée de griffes (2) solidaires d'un support transversal (3) lui même solidaire d'un moyen (4,21,22) configuré pour prérégler angulairement ledit support transversal (3) selon plusieurs positions de réglage (23) de manière à faire croître la pression des griffes (2) sur le gazon au fur et à mesure de l'avancement de l'épandage qui s'effectue par passages successifs
b) un deuxième moyen destiné à améliorer, à chaque passage, la répartition, sur ledit gazon, du sable et des granulats restant en surface après le passage du premier moyen, ledit deuxième moyen comportant au moins une rangée de brosses (5,6) comprenant :
- deux brosses centrales jointives (5), disposées en forme de « V », adaptées pour déplacer obliquement, dans la direction des extrémités libres desdites brosses centrales (5), une partie du sable et des granulats ;
- au moins deux brosses latérales (6), disposées, chacune, de chaque côté des brosses centrales (5), parallèlement à celle qui lui est en regard, adaptées pour déplacer obliquement, dans la direction des extrémités extérieures desdites brosses latérales (6), une partie du sable et des granulats.

2. Dispositif, selon la revendication 1, **caractérisé en ce que** le châssis (1) supporte, en addition, des extensions latérales (7), conçues pour améliorer le travail sur les bords de terrains recouverts de gazon synthétique, pourvues de moyens (25,26,27) configurés pour permettre auxdites extensions latérales (7) d'être rabattues sur ledit châssis (1) ou d'être désolidarisées de celui-ci, comprenant, chacune :
a) au moins une rangée de griffes (8) disposées en oblique afin que leurs extrémités s'étendent au delà du côté extérieur de chaque extension latérale (7), lesdites griffes étant solidaires d'un support transversal (9) lui même solidaire d'un moyen (10,30,31) configuré pour prérégler angulairement ledit support transversal (9) selon plusieurs positions de réglage de manière à faire croître la pression des griffes (8) sur le gazon au fur et à mesure de l'avancement de l'épandage qui s'effectue par passages successifs ;
b) au moins une brosse (11) disposée en oblique afin que son effet tende à ramener le sable et les granulats vers l'intérieur du terrain.

3. Dispositif, selon la revendication 1 ou 2, **caractérisé en ce que** les griffes (2) et (8) sont réalisées en un matériau élastique.

4. Dispositif, selon la revendication 1, **caractérisé en ce que** le premier moyen comporte trois rangées de griffes (2) solidaires de trois supports transversaux (3) eux mêmes solidaires d'un même moyen (4) conçu pour :
- d'une part, prérégler angulairement, simultanément, lesdits supports transversaux (3) selon plusieurs positions de réglage de manière à faire croître la pression des griffes (2) sur le gazon au fur et à mesure de l'avancement de l'épandage ;
- d'autre part, solidariser, séparément, chacun desdits supports transversaux (3) audit même moyen (4) de manière à faire croître le nombre de rangées de griffes (2) opérantes au fur et à mesure de l'avancement de l'épandage.

5. Dispositif, selon la revendication 1 ou 4, **caractérisé en ce que** le moyen (4, 21, 22) de préréglage est constitué d'un bras d'actionnement (4) relié à une platine (22) pourvue de plusieurs trous (23) adaptés pour définir plusieurs positions de réglages angulaires du ou des supports transversaux (3) qui sont reliées audit bras (4) au moyen de biellettes (22).

6. Dispositif, selon la revendication 2, **caractérisé en ce que** chaque extension latérale (7) comporte deux rangées de griffes (8) solidaires de deux supports transversaux (9) eux mêmes solidaires d'un même moyen (10) conçu pour :
- d'une part, prérégler angulairement, simultanément, lesdits support (9) selon plusieurs positions de réglage (32) de manière à faire croître la pression des griffes (8) sur le gazon au fur et à mesure de l'avancement de l'épandage ;
- d'autre part, solidariser, séparément, chacun desdits supports (9) audit même moyen (10) de manière à faire croître le nombre de rangées de griffes (8) opérantes au fur et à mesure de l'avancement de l'épandage.

7. Dispositif, selon la revendication 2 ou 6, **caractérisé en ce que** chaque extension latérale, porteuse des griffes (8) et de la brosse (11), est constituée d'une platine horizontale (7) passant sous le châssis (1), d'une paroi de déport (24) verticale ou inclinée, d'une paroi supérieure horizontale (25) dont l'extrémité est reliée à une articulation (26) solidaire d'un support (27), lui même solidaire de longerons (28) du châssis (1), qui permet, par coulissement, le déplacement horizontal (F4) de celle-ci entre une position interne de travail, articulation en position (26), où la platine (7) passe sous le châssis (1) et une position externe de repos, articulation en position (29), où celle-ci est dégagée afin d'être rabattue (F5) sur ledit châssis.

8. Dispositif, selon la revendication 1, **caractérisé en ce que** le châssis (1) comporte :
- latéralement, à l'avant, par rapport au sens d'avancement du dispositif, à l'extérieur de la zone de travail, des bras de déport (12) soutenant des axes (13) porteurs de roues (14) ;
- à l'arrière par rapport au sens d'avancement du dispositif, des bras de soutien (15) soutenant des axes (16) porteurs de roues (17) ;
et **en ce que** les axes (13) et (16) porteurs de roues (14) et (17) comportent des moyens permettant de prérégler leur hauteur, donc celle des roues (14,17), par rapport aux bras de départ respectifs (12) et (15), donc du châssis (1).

9. Dispositif, selon la revendication 1, **caractérisé en ce que** le châssis (1) est destiné à être relié à un engin roulant motorisé au moyen d'une flèche de tractage (18).

10. Dispositif, selon la revendication 1, **caractérisé en ce que** le châssis (1) est destiné à être relié à un engin roulant motorisé au moyen d'un dispositif 3 points.

## Patentansprüche

1. Vorrichtung zum Verbessern der Einarbeitung und der Verteilung in einem Kunstrasen durch Durchmischen von Sand, der dazu gedacht ist, den Rasen zu beschweren, sowie von Gummigranulat, das dazu gedacht ist, seine Biegsamkeit zu verbessern, wobei der Kunstrasen aus biegsamen Halmen besteht, die mit einem Teppich fest verbunden sind;
**dadurch gekennzeichnet, dass** sie auf demselben Gestell (1) getragen und nacheinander und in Zusammenwirkung einwirkend Folgendes umfasst:
a) ein erstes Mittel, das dazu gedacht ist, bei jedem Durchgang durch Anheben der Halme das Eindringen des Sandes und des Granulats zwischen den Grashalmen möglichst nahe an dem Teppich zu verbessern, wobei das Mittel mindestens eine Reihe von Krallen (2) umfasst, die mit einem Querträger (3) fest verbunden sind, der seinerseits mit einem Mittel (4, 21, 22) fest verbunden ist, das konfiguriert ist, um den Querträger (3) gemäß mehreren Einstellpositionen (23) derart winkelmäßig voreinzustellen, dass sich der Druck der Krallen (2) auf den Rasen in dem Maße erhöht, wie die Streuung fortschreitet, die in aufeinanderfolgenden Durchgängen erfolgt,
b) ein zweites Mittel, das dazu gedacht ist, bei jedem Durchgang die Verteilung auf dem Rasen des Sandes und des Granulats, die nach dem Durchgang des ersten Mittels an der Oberfläche bleiben, zu verbessern, wobei das zweite Mittel mindestens eine Reihe von Bürsten (5, 6) umfasst, die Folgendes umfasst:
- zwei aneinanderstoßende mittlere Bürsten (5), die V-förmig angeordnet sind und geeignet sind, um in der Richtung der freien Enden der mittleren Bürsten (5) einen Teil des Sandes und des Granulats schräg zu verschieben;
- mindestens zwei seitliche Bürsten (6), die jeweils auf beiden Seiten der mittleren Bürsten (5) angeordnet sind, parallel zu derjenigen, die ihr gegenüberliegt, und die geeignet sind, um in der Richtung der äußeren Enden der seitlichen Bürsten (6) einen Teil des Sandes und des Granulats schräg zu verschieben.

2. Vorrichtung nach Anspruch 1, **dadurch gekennzeichnet, dass** das Gestell (1) zusätzlich seitliche Erweiterungen (7) trägt, die ausgelegt sind, um die Arbeit an den Rändern von mit Kunstrasen bedeckten Böden zu verbessern, und die mit Mitteln (25, 26, 27) versehen sind, die konfiguriert sind, um es zu ermöglichen, dass die seitlichen Erweiterungen (7) auf das Gestell (1) eingeklappt oder davon gelöst werden können, jeweils umfassend:
a) mindestens eine Reihe von Krallen (8), die schräg angeordnet sind, damit sich ihre Enden über die Außenseite jeder seitlichen Erweiterung (7) hinaus erstrecken, wobei die Krallen mit einem Querträger (9) fest verbunden sind, der seinerseits mit einem Mittel (10, 30, 31) fest verbunden ist, das konfiguriert ist, um den Querträger (9) gemäß mehreren Einstellpositionen derart winkelmäßig voreinzustellen, dass sich der Druck der Krallen (8) auf den Rasen in dem Maße erhöht, wie die Streuung fortschreitet, die in aufeinanderfolgenden Durchgängen erfolgt;
b) mindestens eine Bürste (11), die schräg angeordnet ist, damit ihre Wirkung dazu neigt, den Sand und das Granulat zum Innern des Bodens zurückzubringen.

3. Vorrichtung nach Anspruch 1 oder 2, **dadurch gekennzeichnet, dass** die Krallen (2) et (8) aus einem elastischen Material ausgebildet sind.

4. Vorrichtung nach Anspruch 1, **dadurch gekennzeichnet, dass** das erste Mittel drei Reihen von Krallen (2) umfasst, die mit drei Querträgern (3) fest verbunden sind, die ihrerseits mit demselben Mittel (4) fest verbunden sind, das ausgelegt ist, um:
- einerseits gleichzeitig die Querträger (3) gemäß mehreren Einstellpositionen derart winkelmäßig voreinzustellen, dass sich der Druck der Krallen (2) auf den Rasen in dem Maße erhöht, wie die Streuung fortschreitet;
- andererseits getrennt jeden der Querträger (3) mit dem gleichen Mittel (4) fest zu verbinden, um die Anzahl der Reihen von wirksamen Krallen (2) in dem Maße zu erhöhen, wie die Streuung fortschreitet.

5. Vorrichtung nach Anspruch 1 oder 4, **dadurch gekennzeichnet, dass** das Mittel (4, 21, 22) zur Voreinstellung aus einem Betätigungsarm (4) besteht, der mit einer Platte (22) verbunden ist, die mit mehreren Löchern (23) versehen ist, die geeignet sind, um mehrere winkelmäßige Einstellpositionen des oder der Querträger (3) zu definieren, die mit dem Arm (4) anhand von Schwingarmen (22) verbunden sind.

6. Vorrichtung nach Anspruch 2, **dadurch gekennzeichnet, dass** jede seitliche Erweiterung (7) zwei Reihen von Krallen (8) umfasst, die mit zwei Querträgern (9) fest verbunden sind, die ihrerseits mit demselben Mittel (10) fest verbunden sind, das ausgelegt ist, um:
- einerseits gleichzeitig die Träger (9) gemäß mehreren Einstellpositionen (32) derart winkelmäßig voreinzustellen, dass sich der Druck der Krallen (8) auf den Rasen in dem Maße erhöht, wie die Streuung fortschreitet;
- andererseits getrennt jeden der Träger (9) mit dem gleichen Mittel (10) fest zu verbinden, um die Anzahl der Reihen von wirksamen Krallen (8) in dem Maße zu erhöhen, wie die Streuung fortschreitet.

7. Vorrichtung, nach Anspruch 2 oder 6, **dadurch gekennzeichnet, dass** jede seitliche Erweiterung, die Krallen (8) und Bürsten (11) trägt, aus einer waagerechten Platte (7), die unter dem Gestell (1) hindurch geht, aus einer senkrechten oder geneigten Verlagerungswand (24), aus einer waagerechten oberen Wand (25), deren Ende mit einem Gelenk (26) verbunden ist, das mit einem Träger (27) fest verbunden ist, der seinerseits mit Längsträgern (28) des Gestells (1) fest verbunden ist und durch Gleiten die waagerechte Verschiebung (F4) des Gelenks zwischen einer inneren Arbeitsposition, bei der das Gelenk in Position (26) ist, wo die Platte (7) unter dem Gestell (1) hindurchgeht, und einer äußeren Ruheposition, bei der das Gelenk in Position (29) ist, wo dieses ausgerückt ist, um auf das Gestell eingeklappt zu werden (F5), ermöglicht.

8. Vorrichtung nach Anspruch 1, **dadurch gekennzeichnet, dass** das Gestell (1) Folgendes umfasst:
- seitlich vorne im Verhältnis zur Vorwärtsrichtung der Vorrichtung, außerhalb der Arbeitszone, Verlagerungsarme (12), die Achsen (13) abstützen, die Räder (14) tragen;
- hinten im Verhältnis zur Vorwärtsrichtung der Vorrichtung Stützarme (15), die Achsen (16) abstützen, die Räder (17) tragen;
und dass die Achsen (13) und (16), die Räder (14) und (17) tragen, Mittel umfassen, die es ermöglichen, ihre Höhe, und somit die der Räder (14, 17) im Verhältnis zu den jeweiligen Verlagerungsarmen (12) und (15), und somit dem Gestell (1), voreinzustellen.

9. Vorrichtung nach Anspruch 1, **dadurch gekennzeichnet, dass** das Gestell (1) dazu gedacht ist, mit einem motorisierten fahrbaren Gerät anhand einer Zuggabel (18) verbunden zu werden.

10. Vorrichtung nach Anspruch 1, **dadurch gekennzeichnet, dass** das Gestell (1) dazu gedacht ist, mit einem motorisierten fahrbaren Gerät anhand einer 3-Punkt-Vorrichtung verbunden zu werden.

## Claims

1. Device designed to improve the incorporation and the distribution, by mixing, in a synthetic grass, sand intended to weight it as well as rubbery aggregates intended to improve its flexibility, said synthetic grass being constituted of flexible strands integral with a belt;
**characterised in that** it comprises, supported by the same frame (1) and acting successively and in cooperation:
a) a first means intended to improve, at each passage, by lifting the strands, the penetration of the sand and of the aggregates between the strands of the turf close to the belt, said means comprising at least one row of grippers (2) integral with a transversal support (3) itself integral with a means (4, 21, 22) configured to angularly preset said transversal support (3) according to several setting positions (23) in such a way as to increase the pressure of the grippers (2) on the turf as the spreading progresses that takes place in successive passes
b) a second means intended to improve, at each pass, the distribution, on said turf, of the sand and of the aggregates remaining on the surface after the passing of the first means, said second means comprising at least one row of brushes (5, 6) comprising:
- two central joined brushes (5), arranged in the shape of a "V", suited to be displaced obliquely, in the direction of the free ends of said central brushes (5), a portion of the sand and of the aggregates;
- at least two side brushes (6), arranged, each, on each side of the central brushes (5), parallel to the one that is facing it, suited to be displaced obliquely, in the direction of the outside ends of said side brushes (6), a portion of the sand and of the aggregates.

2. Device, according to claim 1, **characterised in that** the frame (1) supports, in addition, side extensions (7), designed to improve the work on the edges of fields covered with synthetic grass, provided with means (25, 26, 27) configured to allow said side extensions (7) to be folded back on said frame (1) or to be detached from the latter, comprising, each:
a) at least one row of grippers (8) arranged obliquely so that their ends extend beyond the exterior side of each side extension (7), said grippers being integral with a transversal support (9) itself integral with a means (10,30,31) configured to angularly preset said transversal support (9) according to several setting positions in such a way as to increase the pressure of the grippers (8) on the turf as the spreading progresses which is carried out by successive passes;
b) at least one brush (11) arranged obliquely so that its effect tends to return the sand and the aggregates towards the interior of the field.

3. Device, according to claim 1 or 2, **characterised in that** the grippers (2) and (8) are made of an elastic material.

4. Device, according to claim 1, **characterised in that** the first means comprises three rows of grippers (2) integral with three transversal supports (3) themselves integral with the same means (4) designed to:
- on the one hand, angularly preset, simultaneously, said transversal supports (3) according to several setting positions in such a way as to increase the pressure of the grippers (2) on the turf as the spreading progresses;
- on the other hand, making integral, separately, each of said transversal supports (3) with the same means (4) in such a way as to increase the number of rows of operating grippers (2) as the spreading progresses.

5. Device, according to claim 1 or 4, **characterised in that** the means (4, 21, 22) for presetting is constituted of an actuating arm (4) connected to a plate (22) provided with several holes (23) suited for defining several setting angular positions of the transversal support or supports (3) which are connected to said arm (4) by means of rods (22).

6. Device, according to claim 2, **characterised in that** each side extension (7) comprises two rows of grippers (8) integral with two transversal supports (9) themselves integral with the same means (10) designed to:
- on the one hand, angularly preset, simultaneously, said support (9) according to several setting positions (32) in such a way as to increase the pressure of the grippers (8) on the turf as the spreading progresses;
- on the other hand, make integral, separately, each of said supports (9) to said same means (10) in such a way as to increase the number of rows of operating grippers (8) as the spreading progresses.

7. Device, according to claim 2 or 6, **characterised in that** each side extension, bearing grippers (8) and the brush (11), is constituted of a horizontal plate (7) passing under the frame (1), of a vertical or inclined offset wall (24), of a horizontal upper wall (25) of which the end is connected to an articulation (26) integral with a support (27), itself integral with stringers (28) of the frame (1), which allows, by sliding, the horizontal displacement (F4) of the latter between an internal working position, articulation in position (26), where the plate (7) passes under the frame (1) and an external idle position, articulation in position (29), where the latter is cleared in order to be folded back (F5) on said frame.

8. Device, according to claim 1, **characterised in that** the frame (1) comprises:
- laterally, at the front in relation to the forward direction of the device, to the exterior of the working zone, offsetting arms (12) supporting the axes (13) bearing the wheels (14);
- at the rear in relation to the forward direction of the device, support arms (15) supporting axes (16) bearing wheels (17);
and **in that** the axes (13) and (16) bearing wheels (14) and (17) comprise means making it possible to preset their height, therefore than of the wheels (14, 17), in relation to the respective offsetting arms (12) and (15), therefore of the frame (1).

9. Device, according to claim 1, **characterised in that** the frame (1) is intended to be connected to a motorised rolling device by means of a tractor boom (18).

10. Device, according to claim 1, **characterised in that** the frame (1) is intended to be connected to a motorised rolling device by means of a 3-point device.
